# EUROPÄISCHE PATENTSCHRIFT

(11) **EP 1 759 919 B1**
(45) Veröffentlichungstag und Bekanntmachung des Hinweises auf die Patenterteilung: **22.04.2009**
(21) Anmeldenummer: 06017712.8
(22) Anmeldetag: 25.08.2006
(51) Int. Cl.: B60P 3/40, B60P 1/64, B62D 21/14

(54) **Ausziehbarer Lastenträger für Fahrzeuge**
Extendable load carrying frame for vehicles
Cadre télescopique pour une véhicule

(30) Priorität: 31.08.2005 DE 102005041540
(43) Veröffentlichungstag der Anmeldung: 07.03.2007
(60) Teilanmeldung: 08014567.5
(73) Patentinhaber: Magna Car Top Systems GmbH, 74321 Bietigheim-Bissingen (DE)
(72) Erfinder: Hahn, Gerald, 21255 Wistedt (DE); Schumacher, Thorsten, 25495 Kummerfeld (DE); Maucher, Eberhard, 89075 Ulm (DE); Hans, Sandro, 65183 Wiesbaden (DE)

(56) Entgegenhaltungen:
- WO-A-03/097406
- US-A- 3 488 077
- US-A- 4 877 293
- US-A1- 2002 180 231
- US-A1- 2004 146 373
- US-B1- 6 199 894
- US-B1- 6 312 034

## Beschreibung

Die Erfindung betrifft einen ausziehbaren Lastenträger für Fahrzeuge, insbesondere Pkw, gemäß dem Oberbegriff des Anspruches 1.

Lastenträger der vorgenannten Art sind aus der US 3 488 077 und US 6 312 034 bekannt. Sie sind als rückseitig zu Pickup-Fahrzeugen in Stoßstangenhöhe teleskopisch ausziehbare Tragvorrichtungen für Wohncontainer ausgebildet, die sich mit einem rückwärtigen, über die Ladefläche des Pickup-Fahrzeuges nach hinten überstehenden Überhang auf der ausgezogenen Tragvorrichtung abstützen.

Zur Festlegung gegenüber dem Fahrzeugaufbau sind dem Lastenträger Führungsbahnen zugeordnet, die am Fahrzeugaufbau befestigbare Führungsprofile aufweisen, in denen längsverschieblich Tragprofile gehalten sind, wobei die Tragprofile an ihren rückwärtigen freien Enden einen Stoßfänger des Fahrzeuges tragen und über Arretierungseinrichtungen zu den Führungsprofilen, und damit auch zum Fahrzeugaufbau festzulegen sind.

Ausgehend von den äußeren Führungsprofilen sind die ausziehbaren Tragprofile über Steckbolzenanordnungen zu arretieren, die auf in den Tragprofilen angeordnete Lochraster zugreifen, wobei die Tragprofile infolge ihrer Führung in den umschließenden Führungsprofilen über ihre ausziehbaren Längenabschnitte lediglich im ausgezogenen Zustand belegt werden können, zur bleibenden Montage von Anbauteilen aber nicht zur Verfügung stehen.

Hiervon abgesehen müssen Führungsprofile und Tragprofile auch mit relativ engem Spiel zueinander ausgeführt sein, da anderenfalls die Arretierungsbolzen zugleich Tragfunktionen übernehmen müssen, was zu hohen lokalen Belastungen seitens der Führungsbahnen führen würde. Entsprechend enge Spiele sind aber kritisch unter Korrosionsgesichtspunkten.

Der Erfindung liegt die Aufgabe zugrunde, einen ausziehbaren Lastenträger der eingangs genannten Art dahingehend zu gestalten, dass dieser die bleibende Anordnung von Anbauteilen in seinem ausziehbaren Bereich ermöglicht und auch unter Korrosionsgesichtspunkten unkritisch ist, was insbesondere für den Anbau von Lastenträgern an Personenkraftwagen wesentlich ist, die jahreszeitlich bedingt oft längere Zeit nicht benutzt werden und die im Bedarfsfall auch von ungeübten Personen jederzeit leicht zu bedienen sein sollen.

Erreicht wird dies mit den Merkmalen des Anspruches 1, demzufolge als Führungsprofile der Führungsbahnen die inneren Profile genutzt werden, so dass bei entsprechender Anbindung der Führungsprofile zum Fahrzeugaufbau die Tragprofile für die Anbringung von Montageteilen ungeachtet der erforderlichen Verschieblichkeit zu den Führungsprofilen zur Verfügung stehen und genutzt werden können, wobei insbesondere auch der Zwischenraum zwischen den Führungsbahnen für eine solche Nutzung zur Verfügung steht, so dass sich ein entsprechend flacher Aufbau realisieren lässt, wie er bauraum- und funktionsbedingt in Verbindung mit der Nutzung des Lastenträgers als heckseitig ausziehbarer Fahrradträger von Personenkraftwagen gefordert ist. Zudem bietet eine derartige Ausgestaltung auch günstige Möglichkeiten der Führung und Arretierung der Tragprofile gegenüber den Führungsprofilen ungeachtet ausreichender, auch unter Gesichtspunkten der Korrosion und Verschmutzung wünschenswerter Spiele, wobei sich die erforderliche Arretierung zwischen Führungs- und Tragprofilen im Rahmen der Erfindung auch mit Spannvorrichtungen realisieren lässt, die nur geringen Raumbedarf aufweisen, sowie günstig zu platzieren und mit geringem Kraftaufwand zu bedienen sind.

Die in Verbindung mit der Spannvorrichtung vorgesehene, im Obergurt längsgeschlitzte Ausführung des Führungsprofiles macht es darüber hinaus möglich, die Spannvorrichtung auch für eine aufgrund der angestrebten groben Spiele zwischen Führungs- und Tragprofil unter Umständen wünschenswerte Querabstützung der Tragprofile zu nutzen. Ferner lässt sich über die Spannvorrichtung mit einfachen Teilen und bei geringem konstruktiven und fertigungstechnischen Aufwand auch eine Aussteifung des unter Festigkeitsgesichtspunkten bei ausgezogenem Lastenträger kritischen Übergangsbereiches zwischen Führungsprofil und Tragprofil erreichen, wenn zum Tragprofil eine lagefeste Abdeckplatte und zum Führungsprofil eine eingelegte Gegenplatte vorgesehen werden, die über die den Längsschlitz des Führungsprofiles durchsetzende Spannverbindung der Spannvorrichtung gegeneinander zu verspannen sind, wobei über die Gegenplatte auch die Querstabilisierung zu verbessern ist.

Die Spannkraft kann im Rahmen der Erfindung in einfacher Weise über einen Spannzapfen übertragen werden, der gleichzeitig auch die Spannachse bestimmt, wobei mit Vorteil ein entsprechendes Spannschloss der Spannverbindung den oberen, zur Abdeckplatte aufliegenden Teil der Spannverbindung bildet.

Für das Spannschloss ist im Rahmen der Erfindung ein Aufbau mit zur Spannachse drehbarer Spannscheibe und einem Gegenstück vorgesehen, wobei die Spannscheibe und das Gegenstück mit in Spannrichtung gegeneinander gerichteten, auf Lücke zueinander liegenden und bei ungespanntem Spannschloss einander in Spannrichtung überlappenden, sektorförmigen Abdrängelementen versehen sind, die entsprechend der Drehbarkeit der Spannscheibe bevorzugt zentrisch symmetrisch zur Spannachse angeordnet sind. Während die Spannscheibe als Betätigungselement drehbar ist, ist das Gegenstück zur Abdeckplatte bzw. zum Obergurt des Tragprofiles lagefest und kann durch entsprechende Ausformung dieser Teile in diese auch integriert sein. Bevorzugt ist im Rahmen der Erfindung allerdings das Gegenstück als separates Bauteil ausgestaltet, das zur Abdeckplatte, oder direkt zum Tragprofil lagefest zu montieren ist, da dies im Rahmen der Erfindung die Möglichkeit bietet, gleich ausgebildete Gegenstücke, die meist scheibenförmig gestaltet sind, durch entsprechend zur Spannachse im Drehwinkel versetzte Anordnung so zum jeweiligen Tragprofil auszurichten und zu positionieren, dass sich für die Spannscheiben bezogen auf das jeweils zugeordnete Tragprofil gleiche Schwenkbereiche - bezogen auf die gespannte und die ungespannte Lage des Spannschlosses - ergeben.

Für den Aufbau des Spannschlosses ist es weiter zweckmäßig, die Spannscheibe, oder das in der Grundform ebenfalls scheibenförmige Gegenstück mit einem umgreifenden Rand zu versehen, so dass die sektorförmigen Abdrängelemente quasi innerhalb eines Gehäuses und somit geschützt liegen, was auch eine entsprechende Schmierfettfüllung möglich macht.

Im Hinblick auf die einfache und stabile Herstellbarkeit eines solchen Spannschlosses erweist es sich als zweckmäßig, wenn von den zusammenwirkenden, der Spannscheibe und dem Gegenstück zugeordneten sektorförmigen Abdrängelementen die dem Gegenstück zugeordneten Abdrängelemente mit räumlich gekrümmten Abdrängflächen versehen werden, wobei die Abdrängflächen von einer Grundebene aus ansteigen, um in eine zur Grundebene beabstandete Spannebene einzulaufen. Der Abstand zwischen Grundebene und Spannebene im Überlappungsbereich zwischen den der Spannscheibe und den dem Gegenstück zugeordneten sektorförmigen Abdrängelementen entspricht dem erreichbaren Spannweg, und damit auch dem über das Spannschloss in Richtung der Spannachse erreichbaren Spannweg.

Grundsätzlich liegt es im Rahmen der Erfindung, die sektorförmigen Abdrängelemente mit zwischen Grundebene und Spannebene geneigt verlaufenden Abdrängflächen sowohl an der Spannscheibe wie auch am Gegenstück vorzusehen. Bevorzugt ist aber die Ausgestaltung, bei der das Gegenstück entsprechend räumlich ausgeformte Seiten aufweist, wobei zweckmäßigerweise der Anstieg der Abdrängflächen aus der Grundebene verhältnismäßig steil ist, so dass sich - bei nicht gespanntem Spannschloss - eine zentrierende Wirkung über die sektorförmigen Abdrängelemente der Spannscheibe ergibt. In die Spannebene ist demgegenüber ein weicher Einlauf der Abdrängfläche vorgesehen, wobei eine Sicherung der in der Spannebene gegebenen Spannlage insbesondere durch Reibschluss zu erreichen ist.

Für die Spannscheibe erweist sich eine Betätigung über einen Stellhebel als zweckmäßig, wobei der Drehwinkel für die Spannscheibe zwischen gespannter und ungespannter Lage des Spannschlosses bevorzugt in der Größenordnung von etwa 90° liegt und wobei für die gespannte Lage des Spannschlosses eine Stellung des Spannhebels zweckmäßig ist, in der dieser sich in Überdeckung zur jeweiligen Führungsbahn erstreckt.

Die Verspannung des Spannschlosses erfolgt gegen Federkraft, wobei in der ungespannten Lage des Spannschlosses die Feder vollständig ausgefedert ist und das Tragprofil mit einer seiner Schwerkraft entsprechenden Kraft am Führungsprofil aufliegt.

Zwischen dem Führungsprofil und der in dieses eingelegten Gegenplatte ist dabei ein für die Längsverschieblichkeit zwischen Tragprofil und Führungsprofil ausreichendes Spiel gegeben. Durch Verspannung des Spannschlosses wird dieses Spiel eliminiert und die Anpresskraft entsprechend der Federkennlinie der Tellerfeder erhöht und das Tragprofil zum Führungsprofil festgelegt.

In Verbindung mit der im unverspannten Zustand der Spannvorrichtung gegebenen Längsverschieblichkeit des Lastenträgers erfolgt dessen Sicherung in der jeweiligen Endlage erfindungsgemäß über eine Drehfalle, die auf ihre Verriegelungslage federbelastet ist, wobei durch die erfindungsgemäße Ausgestaltung der Drehfalle als zweiarmiger Hebel und die Vorspannung auf die Verriegelungsstellung die Drehfalle in beiden Richtungen, d. h. sowohl in Auszugrichtung wie auch in Einschubrichtung des ausziehbaren Teils des Lastenträgers angefahren und dadurch der ausziehbare Teil des Lastenträgers verriegelt werden kann.

Eine solche Anordnung zeichnet sich durch hohe Funktionssicherheit aus, und dies bei einfacher konstruktiver Gestaltung, wobei die Drehfalle bevorzugt im längsmittleren Bereich zwischen den Führungsbahnen am bezogen auf einen heckseitigen ausziehbaren Lastenträger rückwärtigen Endbereich des zum Fahrzeug feststehenden Teils des Lastenträgers vorgesehen ist.

Weitere Einzelheiten und Merkmale der Erfindung ergeben sich aus den Ansprüchen. Ferner wird die Erfindung nachfolgend anhand von Ausführungsbeispielen erläutert. Es zeigen:
- Fig. 1: einen erfindungsgemäßen ausziehbaren Lastenträger, in einer auf die Grundstruktur des Trägers reduzierten perspektivischen Explosivdarstellung, mit dessen zum Fahrzeug lagefesten Trägerteil und dem gegenüber dem lagefesten Trägerteil teleskopisch ausziehbaren Trägerteil,
- Fig. 2: eine Draufsicht auf einen erfindungsgemäßen ausziehbaren Lastenträger mit seinen wesentlichsten Komponenten im zusammengeschobenen Zustand,
- Fig. 3: eine der Fig. 2 entsprechende Darstellung bei ausgezogenem Lastenträger,
- Fig. 4: eine Ansicht des Lastenträgers, wie er in Fig. 3 dargestellt ist, in Richtung des Pfeiles IV,
- Fig. 5: eine schematisierte und vereinfachte Schnittdarstellung eines Lastenträgers gemäß Fig. 3 bei einer Schnittführung V-V, wobei von denen in der Schnittebene liegenden Spannvorrichtungen die eine in einer vereinfachten Explosionsdarstellung gezeigt ist,
- Fig. 6 bis 10: schematisierte Darstellungen, teilweise im Schnitt, des in Verbindung mit der Spannvorrichtung vorgesehenen Spannschlosses, und
- Fig. 11: in schematisierter Darstellung eine Drehfallenanordnung, über die der ausziehbare Teil des Lastenträgers in seiner ausgefahrenen und in seiner eingeschobenen Lage verriegelbar ist.

In den Figuren ist mit F die Vorwärtsfahrtrichtung eines nicht dargestellten Fahrzeuges, beispielsweise und insbesondere eines Personenkraftwagens, angegeben, zu dem ein heckseitig ausziehbarer Lastenträger 1 vorgesehen ist, der zueinander beabstandet und parallel verlaufende Führungsbahnen 2, 3 aufweist, die für den Lastenträger 1 eine Tragebene 4 bestimmen und die durch Führungsprofile 5 und Tragprofile 6 gebildet sind.

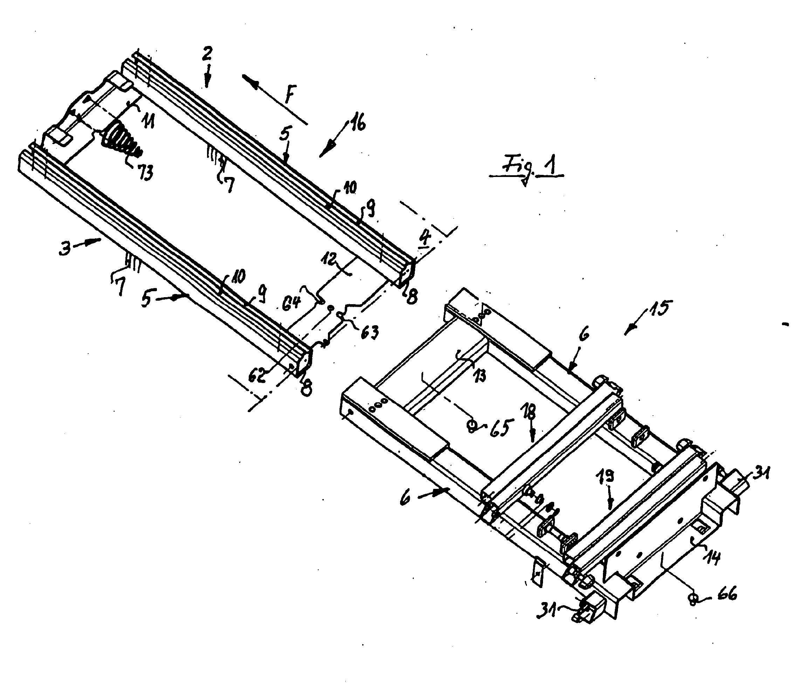

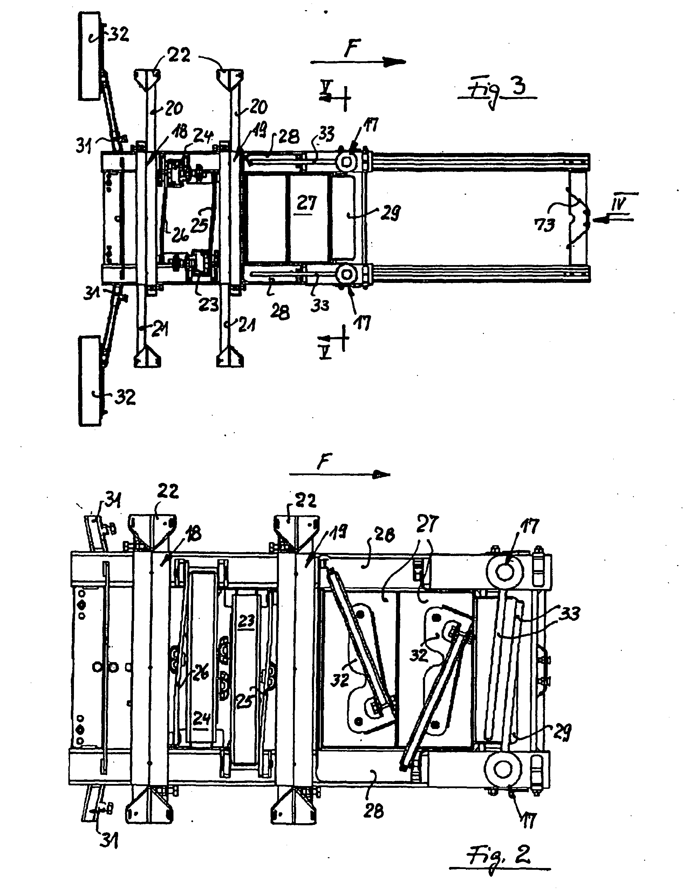

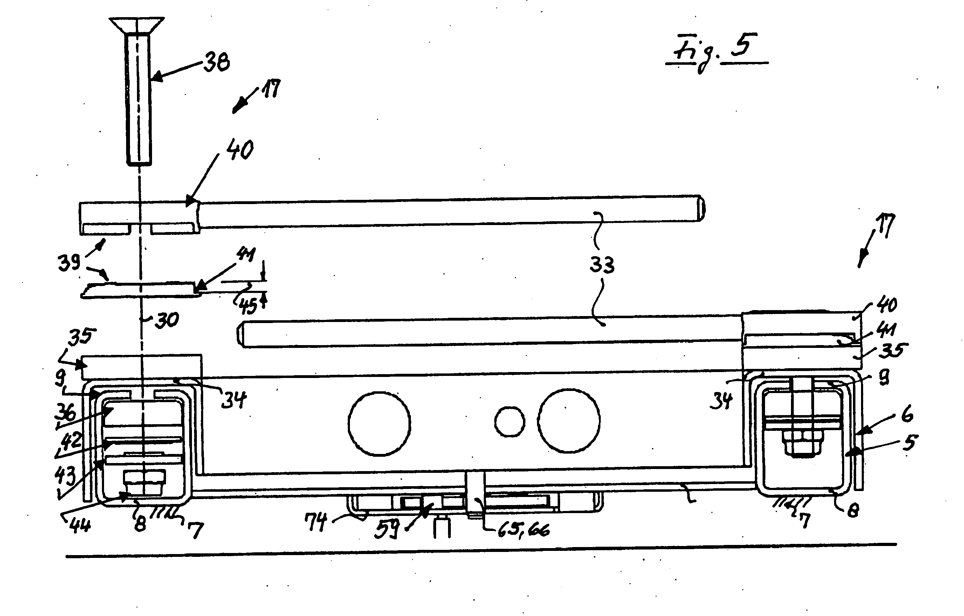

Die Führungsprofile 5 sind als innere Profile der Führungsbahnen 2, 3 zum Aufbau des Fahrzeuges festgelegt, wobei der Fahrzeugaufbau 7 durch eine Schraffierung (siehe Fig. 1 und 3) angedeutet ist und die Festlegung zum Aufbau 7 im Bereich der Führungsprofile 5 durch entsprechende Laschenanordnungen oder dergleichen erfolgen kann, gegebenenfalls auch durch in die Führungsprofile 5 eingeschobene, fahrzeugseitige Stützprofile. Die Anbindung der Führungsprofile 5 zum Aufbau über Laschen oder dergleichen kann im Bereich ihrer Untergurte 8 erfolgen, denen die Obergurte 9 gegenüberliegen, die mit einem längsdurchlaufenden Schlitz - Längsschlitz 10 - versehen sind. Zwischen den Führungsprofilen 5 sind endseitig Querverbindungen 11, 12 vorgesehen und längs der Führungsprofile 5 sind die Tragprofile 6 verschieblich, die als die Führungsprofile 5 übergreifende, insbesondere U-förmige Profile ausgebildet sind. Die Tragprofile 6 sind ebenfalls über Querstreben 13, 14 verbunden, so dass sich ein schlittenförmiges Grundgerüst für den ausziehbaren Teil 15 des Lastenträgers ergibt, der gegenüber dem aufbauseitig festgelegten, lage- und aufbaufesten Teil 16 des Lastenträgers teleskopisch ausziehbar ist. Die eingeschobene und die ausgezogene Lage des ausziehbaren Teiles 15 des Lastenträgers 1 wird als Endlage, was in Fig. 1 nicht ersichtlich ist, gesichert und der ausziehbare Teil 15 ist gegenüber dem lagefesten Teil 16 in der ausgezogenen Lage ferner über eine Spannvorrichtung 17 festzulegen, wie sie in Fig. 5 des Näheren erläutert ist. Ferner trägt der ausziehbare Teil 15 des Lastenträgers 1 die im Hinblick auf dessen Einsatz als Fahrradträger vorgesehenen Montage- bzw. Zubehörteile, wie anhand der Fig. 2 und 3 noch ergänzend beschrieben wird.

Wie Fig. 2 und 3 zeigen, umfasst die Ausrüstung des ausziehbaren Teiles 15 des Lastenträgers 1 als Fahrradträger zwei mit Abstand zueinander angeordnete Querführungen 18, 19, die zu den Tragprofilen 6 lagefest sind und die jeweils Führungskanäle für in Querrichtung nach entgegengesetzten Seiten ausziehbare Ausleger 20, 21 bilden, die im Bereich ihrer freien Enden Auflagen 22 für die Räder eines quer zur Fahrtrichtung F aufzustellenden Fahrrades aufzeigen. Für jedes der nicht gezeigten und mit seinen Laufrädern auf den Aufnahmen 22 abgestellten Fahrräder ist ferner seitlich zu den Querführungen 18, 19, im Zwischenraum zwischen diesen liegend, eine Rahmenstütze 23, 24 vorgesehen. Jeweils eine der Rahmenstützen 23, 24 ist an einem der Tragprofile 6 in Querrichtung verschwenkbar angelenkt und zwischen einer aufrechten Stützlage (Fig. 3) und einer Ablagestellung verschwenkbar, in der sie gegeneinander eingeschwenkt zwischen den Querführungen 18, 19 liegen. Den Rahmenstützen 23, 24 sind jeweils entsprechend verschwenkbare und aufstellbare Stützstreben 25, 26 zugeordnet. Im Rahmen der Erfindung können die Stützstreben auch durch Kniehebel gebildet sein, die in ihrer Strecklage eine Tot- oder Übertotpunktlage einnehmen und abgelegt zusammengefaltet sind.

Gegen das bezogen auf die Fahrtrichtung F vordere Ende des ausziehbaren Teiles 15 des Fahrradträgers ist der an die Querführung 19 anschließende Teil des Raumes zwischen den Tragprofilen 6 durch einen schubladenartigen Einsatzkasten 27 ausgefüllt, der über ausgestellte Randstreifen 28 auf den Tragprofilen 6 und einen Randstreifen 29 auf der Querstrebe 13 abgestützt ist und einen lagefesten Bestandteil des ausziehbaren Teiles 15 bildet, wobei der Einsatzkasten 27 zur umschließenden Umrahmung bevorzugt verklebt ist.

In bezogen auf die Fahrtrichtung vorderen Endbereich des ausziehbaren Teiles 15 sind die in der Verbindung der Tragprofile 6 zu den Führungsprofilen 5 vorgesehenen Spannvorrichtungen 17 angeordnet.

Am gegenüberliegenden Ende der Tragprofile 6 sind diese mit seitlichen Steckaufnahmen 31 für rückseitig zum Fahrzeug anzuordnende Beleuchtungsanordnungen 32 versehen, die, wie Fig. 2 veranschaulicht, zur Überführung des Lastenträgers 1 in seine eingeschobene Nichtgebrauchslage abgenommen und in dem Einsatzkasten 27 abgelegt werden.

In der eingeschobenen Lage des Lastenträgers 1, wie Fig. 2 veranschaulicht, bildet der Lastenträger 1 somit eine sehr kompakte Einheit, wobei die den Spannvorrichtungen 17 zugeordneten Stellhebel 33 ebenfalls eine Querlage einnehmen. Aus dieser der Öffnungslage der Spannvorrichtung 17 entsprechenden Querlage sind die Stellhebel 33 zum Spannen der Spannvorrichtung 17 in die in Fig. 3 veranschaulichten, zu den jeweiligen Führungsbahnen 2, 3 parallelen Lagen verschwenkbar, in der sich die Stellhebel gegen die Querführungen 19 und damit entgegen der Fahrtrichtung F erstrecken und gegebenenfalls auch über eine entsprechende Sicherungsanordnung arretiert sind.

Die das bis auf den Längsschlitz 10 geschlossene Führungsprofil 5 und die das das Führungsprofil 5 übergreifende, U-förmige Tragprofil 6 verbindende Spannvorrichtung 17 zeigt bevorzugt einen Aufbau gemäß Fig. 5, bei dem das Führungsprofil 5 und das Tragprofil 6 in Richtung der Spannachse 30 gegeneinander zu verspannen sind, wobei das Führungsprofil 5 mit dem Obergurt 9 gegen den Steg 34 des im Querschnitt U-förmigen Tragprofiles 6 anliegt. Der Steg 34 - als Obergurt des Tragprofiles 6 - ist im Bereich der Spannvorrichtung 17 von einer Abdeckplatte 35 überdeckt, die sich im Wesentlichen über den in Fahrtrichtung F auslaufenden Endbereich des Tragprofiles 6 erstreckt und die als bevorzugt verstärkende und aussteifende Auflage zum Steg 34 mit diesem fest, beispielsweise durch Schweißung verbunden ist. Zur Abdeckplatte 35 korrespondiert eine innerhalb des Führungsprofiles 5 liegende, längs desselben verschiebbare Gegenplatte 36, die bevorzugt in der Funktion eines Kulissensteins zwischen den Seitenwänden 37 des Führungsprofiles 5 längsverschieblich geführt ist und die in Richtung auf die Abdeckplatte 35 in Überdeckung zu den auf den Längsschlitz 10 zulaufenden Schenkeln des Obergurtes 9 liegt.

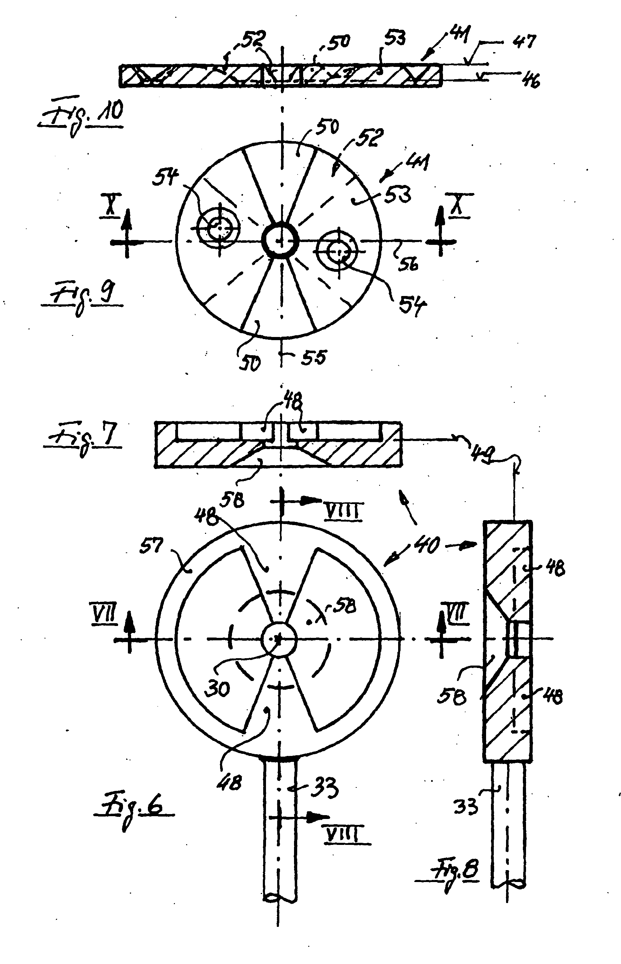

Die Abdeckplatte 35 ist gegen die Gegenplatte 36 über einen die Spannvorrichtung 17 längs der Spannachse 30 durchsetzenden Spannzapfen 38 zu verspannen, und zwar mithilfe eines Spannschlosses 39, das eine Spannscheibe 40 und ein zu dieser korrespondierendes, scheibenförmiges Gegenstück 41 aufweist, gegenüber dem die Spannscheibe 40 bei Verdrehung um die Spannachse 30 in Richtung der Spannachse 30 zu verlagern ist. Das scheibenförmige Gegenstück 41 ist zur Abdeckplatte 35 lagefest, und der Spannzapfen 38 stützt sich einerseits auf der Spannscheibe 40 ab und ist gegen die Gegenplatte 26 über eine Schraubverbindung federnd verspannt, wobei hierzu eine Tellerfeder 42 vorgesehen ist, die in Gegenrichtung zur Gegenplatte 36 auf einer Zentrierscheibe 43 abgestützt ist, die sich ihrerseits gegen eine zum Spannzapfen 38 festgelegte Spannmutter 44 abstützt. Über den Federweg der Tellerfeder 42 und das zum Verfahren des ausziehbaren Teiles 15 erforderliche Spiel zwischen Gegenplatte 36 und Führungsprofil 5 wird der Spannweg vorgegeben, der für die Verspannung beim Schließen des Spannschlosses 39 durch Verdrehung der Spannscheibe 40 gegenüber dem Gegenstück 41 zur Verfügung steht. Dieser Spannweg, in Fig. 5 mit 45 angegeben, entspricht im Ausführungsbeispiel dem Abstand zwischen einer Grundebene 46 des scheibenförmigen Gegenstückes 41 und einer gegenüber dieser in Richtung der Spannachse 30 versetzten Spannebene 47 (Fig. 10). In der gezeigten Ausführungsform weist die Spannscheibe 40 zwei diametral zur Spannachse 30 aneinander gegenüberliegende, sektorförmige Abdrängelemente 48 auf, die gegenüber der Scheibenebene 49 aufragen und sich bei Überdeckungslage der Spannscheibe 40 zum Gegenstück 41 in Richtung auf das Gegenstück erstrecken, das den sektorförmigen Abdrängelementen 48, bezogen auf das nicht gespannte Spannschloss 39, korrespondierende sektorförmige Vertiefungen 50 aufweist, die sich bis auf die Grundebene 46 erstrecken und die in Umfangsrichtung über gegen die Spannebene 47 ansteigende Abdrängflächen 52 begrenzt sind. Die Abdrängflächen 52, als Begrenzungen der seitens des Gegenstückes 41 vorgesehenen Abdrängelemente 53, gehen in die Spannebene 47 verlaufend über, so dass sich in Drehstellungen der Spannscheibe 40 zum Gegenstück 41, denen die seitens der Spannscheibe 40 vorgesehenen Abdrängelemente 48 mit ihren Stirnseiten auf die Abdrängelemente 53 in der Spannebene 57 aufgelaufen sind, eine einer Totlage vergleichbare Spannstellung des Spannschlosses mit reibschlüssiger Sicherung der Drehstellung von Spannscheibe 40 und Gegenstück 41 ergibt. Der hierfür vorgesehene Drehwinkel liegt in der Größenordnung von 90°, wie die Darstellungen gemäß Fig. 2 und 3 durch die Lage der Stellhebel 33 veranschaulichen.

Um im Hinblick auf die aus Fig. 2 ersichtliche, bei symmetrischer Anordnung der Spannvorrichtungen 17 zur Querebene in Bezug auf die Querebene leicht gegensinnige Anstellung der Spannhebel 33 mit symmetrisch ausgebildeten Gegenstücken 41 arbeiten zu können, sind diese in Bezug auf die Längserstreckung der sie tragenden Tragprofile 6 leicht verdreht angeordnet, wobei der diesbezügliche Winkelversatz aus Fig. 9 aus der Lage der Schraublöcher 54 ersichtlich ist, die zur Verschraubung des Gegenstückes 41 gegen die Abdeckplatte 35 vorgesehen sind und die zu einer Querebene 56 zur Symmetrieachse 55 in Gegenrichtung versetzt sind.

Im Ausführungsbeispiel ist die Spannscheibe 40 mit einem umschließenden Rand 57 versehen, dessen Innendurchmesser im Wesentlichen dem Durchmesser der das Gegenstück 41 bildenden Platte entspricht, so dass sich das Spannschloss 39 als nach außen über die Spannscheibe 40 im Wesentlichen randumschlossene Einheit darstellt. Vom Rand 57 geht auch der Stellhebel 33 aus und der Spannzapfen 38 kann mit seinem Kopfteil in eine Senkung 58 eingreifend angeordnet sein, so dass sich für das Spannschloss 39 einschließlich des Stellhebels 53 ein sehr flacher Aufbau ergibt, der im Rahmen der Aufbauhöhe des gesamten Lastenträgers 1 liegt.

Weiter liegt es auch im Rahmen der Erfindung, die Spannvorrichtung, bei grundsätzlich gleichem Aufbau insbesondere auch des Spannschlosses, über einen Stellantrieb zu beaufschlagen und dadurch auch eine Fernbetätigung zu ermöglichen, die gegebenenfalls auch mit einer entsprechenden Antriebsanordnung für die axiale Verstellung des Lastenträgers 1 kombiniert sein kann, so dass für den Lastenträger 1 weitere Bedienungsvereinfachungen im Rahmen der Erfindung liegen.

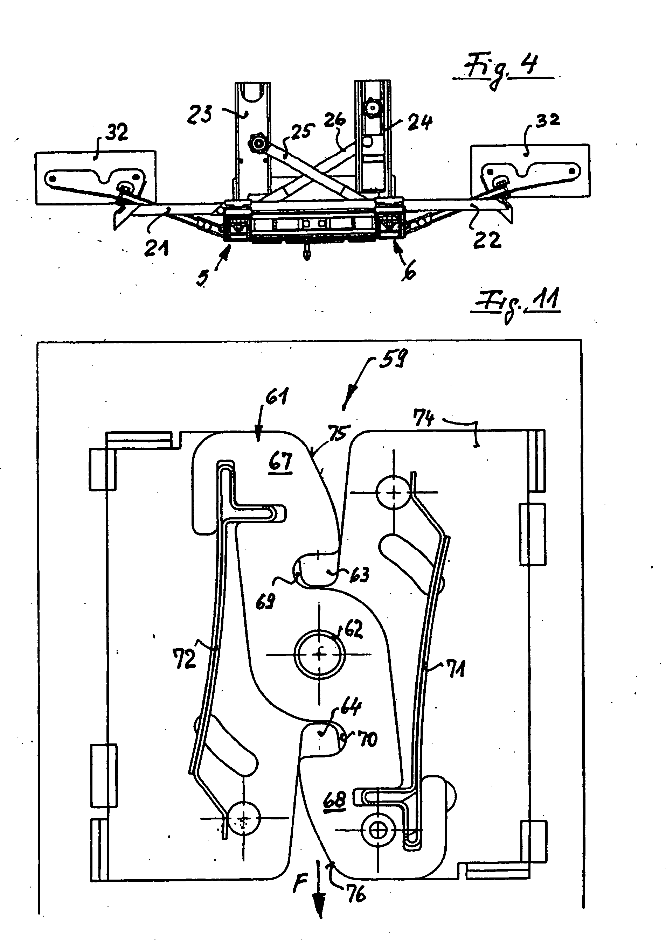

Unabhängig hiervon erweist es sich als zweckmäßig, für den Lastenträger 1 die möglichen Endlagen - ausgezogen oder eingefahren - über eine mechanische Verriegelung zu sichern, die im Rahmen der Erfindung bevorzugt derart gestaltet ist, dass sie sich in Verbindung mit dem Anfahren der jeweiligen Endlage von selbst ergibt. Erfindungsgemäß ist hierzu den Führungsprofilen 5 im Bereich ihres rückwärtigen, zur Fahrtrichtung F entgegengesetzten Teil eine Drehfallenanordnung 59 zugeordnet, wie sie in Fig. 11 veranschaulicht ist, wobei die Drehfallenanordnung 59 bezogen auf Fig. 1 an der Querverbindung 12 abgestützt ist, die für die Drehfalle 61 eine zentrale Lagerbohrung 62 aufweist. Die Querverbindung 12 ist auch mit in Ein- bzw. Ausfahrrichtung des ausziehbaren Teiles 15 des Lastenträgers sich öffnenden Führungsöffnungen 63, 64 versehen ist, denen seitens des ausfahrbaren Teiles 15 des Lastenträgers zur Drehfalle 61 korrespondierende Rastglieder 65, 66 zugeordnet sind. Die Rastglieder 65, 66 sind im Ausführungsbeispiel durch unterseitig zu den Querstreben 13, 14 vorgesehene Rastbolzen gebildet, die in Hochrichtung in Überschneidungsweg zu den Führungsöffnungen 63, 64 liegen.

Die Drehfallenanordnung 59, die als Ausschnitt in Fig. 11 schematisch dargestellt ist, weist eine als Doppelhebel ausgestaltete Drehfalle 61 auf, die, bezogen auf die Fahrtrichtung F, beiderseits der Lagerbohrung 62 sich erstreckende Hebelarme 67, 68 aufweist. Die Hebelarme 67, 68 sind mit sich quer zur Fahrtrichtung F nach entgegengesetzten Seiten öffnenden Fangmäulern 69, 70 versehen, welche bezogen auf die Verriegelungslage der Drehfalle 61 in Überdeckung zu den sich in Fahrtrichtung F erstreckenden Führungsöffnungen 63, 64 liegen, wobei diese Führungsöffnungen in der Darstellung gemäß Fig. 11 in einer Abdeckung 74 für die Drehfallenanordnung 59 veranschaulicht sind, die zur Querverbindung 12 festgelegt sein kann, bei entsprechender Überdeckungen der für diese in Fig. 1 gezeigten Führungsöffnungen 63, 64.

In der Verriegelungslage der Drehfalle 61 liegen, wie in Fig. 11 gezeigt, die Fangmäuler 69, 70 derartig in Überdeckung zu den Führungsöffnungen 63, 64, dass über die Drehfalle 61 das von dieser jeweils erfasste Rastglied 65, 66 in der Führungsöffnung 63, 64 fixiert ist. Die Drehfalle 61 ist bezogen auf diese Verriegelungslage federnd vorgespannt, was im Ausführungsbeispiel gemäß Fig. 1 über Blattfederanordnungen 71, 72 veranschaulicht ist und in Gegenrichtung, durch Beaufschlagung ihrer Abdrängflächen 75, 76 über die Rastglieder 65, 66 abdrängbar. Ferner ist die Drehfalle 61 entgegen der federbelasteten Verriegelungslage über eine nicht dargestellte Fernbetätigung, beispielsweise eine Bowdenzugverbindung in eine Entriegelungslage verschwenkbar, so dass neben einer selbsttätig erfolgenden Verriegelung in der jeweiligen Endlage des ausfahrbaren Teiles 15 des Lastenträgers 1 die Entriegelung auch bei ungünstigen Zugriffsgegebenheiten in einfacher Weise vorgenommen werden kann, andererseits aber eine Entriegelung von außen, beispielsweise durch Nichtbefugte nur unter Schwierigkeiten möglich ist.

Insbesondere in Verbindung mit den angesprochenen Entriegelungsmöglichkeiten für den Lastenträger 1 bei eingefahrenem, ausziehbarem Lastenträgerteil 15 erweist es sich als zweckmäßig, wenn der ausziehbare Lastenträgerteil 15 in Auszugsrichtung auch über einen Auswerfer 73 federbelastet ist, so dass sich beim Lösen der über die Drehfallenanordnung 59 gesicherten eingefahrenen Endstellung eine gewisse Verschiebung des ausziehbaren Lastenträgerteiles 15 in Öffnungsrichtung ergibt, die einen guten Zugriff auf den ausziehbaren Lastenträgerteil 15 ermöglicht, auch wenn dieser in seiner eingeschobenen Lage gegebenenfalls über eine Abdeckung, insbesondere eine Sichtblende zugriffsgeschützt ist. Der Auswerfer 73 ist symbolisch als Wendelfeder in Fig. 1 veranschaulicht, kann in für Schubladen oder dergleichen üblicher Weise aber auch als gebogene Blattfeder (Fig. 3 und 4) oder dergleichen ausgestaltet sein.

## Patentansprüche

1. Ausziehbarer Lastenträger für Fahrzeuge, insbesondere Pkw, mit zwei zu einer Tragebene parallel und beabstandet zueinander verlaufenden Führungsbahnen, die jeweils, konturangepasst und zueinander längsverschieblich, ein inneres und ein äußeres Profil aufweisen, von denen das eine Profil ein aufbauseitig festgelegtes, einen Untergurt (8) und einen Obergurt (9) aufweisendes Führungsprofil (5) und das andere Profil ei zum Führungsprofil ausziehbares und fixierbares Tragprofil (6) bildet, das einen zum Obergurt (9) des Führungsprofiles korrespondierenden Obergurt (34) aufweist,
**dadurch gekennzeichnet,**
**dass** das Führungsprofil (5) das innere Profil bildet und einen längsgeschlitzten Obergurt (9) aufweist, dass das Tragprofil (6) U-Querschnitt aufweist und das Führungsprofil (5) von oben übergreift und dass das Führungsprofil (5) und das Tragprofil (6) über eine den Längsschlitz (10) des Führungsprofiles (5) durchsetzende Spannvorrichtung mit ihren Obergurten (9; Steg 54) gegeneinander verspannt und tragend verbunden sind.

2. Ausziehbarer Lastenträger nach Anspruch 1,
**dadurch gekennzeichnet,**
**dass** das Tragprofil (6) über die Spannvorrichtung (17) zum Führungsprofil (5) quergeführt ist.

3. Ausziehbarer Lastenträger nach Anspruch 1 oder 2,
**dadurch gekennzeichnet,**
**dass** die Spannvorrichtung (17) eine zum Führungsprofil (5) eingelegte Gegenplatte (36) aufweist, die gegen den Obergurt (Steg 34) des Tragprofiles (6) über eine den Längsschlitz (10) durchsetzende Spannverbindung abgestützt ist.

4. Ausziehbarer Lastenträger nach Anspruch 3,
**dadurch gekennzeichnet,**
**dass** der Gegenplatte (36) seitens des Obergurtes (Steg 34) des Tragprofiles (6) eine verstärkende Abdeckplatte (35) zugeordnet ist.

5. Ausziehbarer Lastenträger nach einem der Ansprüche 2 bis 4,
**dadurch gekennzeichnet,**
**dass** die Spannverbindung (17) einen den Längsschlitz (10) durchsetzenden, eine Spannachse (30) bestimmenden Spannzapfen (38) aufweist, der die Führung für ein Spannschloss (39) bildet.

6. Ausziehbarer Lastenträger nach Anspruch 5,
**dadurch gekennzeichnet,**
**dass** das Spannschloss (39) eine zur Spannachse (30) drehbare Spannscheibe (40) sowie ein Gegenstück (41) aufweist und dass die Spannscheibe (40) und das Gegenstück (41) mit in Spannrichtung gegeneinander gerichteten, auf Lücke zueinander liegenden und bei ungespanntem Spannschloss (39) einander in Spannrichtung überlappenden, sektorförmigen Abdrängelementen (48; 53) versehen sind.

7. Ausziehbarer Lastenträger nach Anspruch 6,
**dadurch gekennzeichnet,**
**dass** einander entsprechende Abdrängelemente (48 bzw. 53) zentrischsymmetrisch zur Spannachse (30) vorgesehen sind.

8. Ausziehbarer Lastenträger nach Anspruch 6 oder 7,
**dadurch gekennzeichnet,**
**dass** die sektorförmigen Abdrängelemente (48 bzw. 53) von Spannscheibe (40) und/oder Gegenstück (41) - von einer, der Ausgangslage bei ungespanntem Spannschloss (39) entsprechenden, zur Spannachse (30) senkrechten Grundebene (46) ausgehend - zumindest bezüglich einer ihrer Seiten eine verlaufend in eine zur Grundebene (46) beabstandete Spannebene (47) übergehende Abdrängfläche (52) aufweisen.

9. Ausziehbarer Lastenträger nach Anspruch 8,
**dadurch gekennzeichnet,**
**dass** die zur Grundebene (46) beabstandete und mit dieser über die Abdrängfläche (52) verbundene Spannebene (47) zumindest im Wesentlichen senkrecht zur Spannachse (30) verläuft.

10. Ausziehbarer Lastenträger nach Anspruch 8 oder 9,
**dadurch gekennzeichnet,**
**dass** die Abdrängfläche (52) in die Spannebene (47) verlaufend einläuft.

11. Ausziehbarer Lastenträger nach einem der Ansprüche 7 bis 10,
**dadurch gekennzeichnet,**
**dass** die Abdrängfläche (52) im Anschluss an die Grundebene (46) einen zur Grundebene (46) steil ansteigenden, zur Senkrechten insbesondere flach geneigten Verlauf aufweist.

12. Ausziehbarer Lastenträger nach einem der Ansprüche 8 bis 11,
**dadurch gekennzeichnet,**
**dass** die sektorförmigen Abdrängelemente (48; 53) von Spannscheibe (40) oder Gegenstück (41) an zu durch Abdrängflächen (52) gebildeten Seiten korrespondierenden Seiten zur Grundebene (46) einen im Wesentlichen senkrechten Verlauf aufweisen.

13. Ausziehbarer Lastenträger nach einem der Ansprüche 6 bis 12,
**dadurch gekennzeichnet,**
**dass** die sektorförmigen Abdrängelemente (48; 53) von Spannscheibe (40) und Gegenstück (41) bei ungespanntem Spannschloss (39) mit ihren Seiten im Bereich der Grundebene (46) drehwinkelbegrenzend aneinander anstoßen.

14. Ausziehbarer Lastenträger nach einem der Ansprüche 6 bis 12,
**dadurch gekennzeichnet,**
**dass** das Gegenstück als Gegenscheibe (41) ausgebildet ist.

15. Ausziehbarer Lastenträger nach einem der Ansprüche 6 bis 14,
**dadurch gekennzeichnet,**
**dass** das Gegenstück (41) zum Tragprofil (6) lagefest ist.

16. Ausziehbarer Lastenträger nach Anspruch 5,
**dadurch gekennzeichnet,**
**dass** das als Gegenscheibe ausgebildete Gegenstück (41) in zueinander drehversetzten Lagen an den Tragprofilen (6) zu befestigen ist.

17. Ausziehbarer Lastenträger nach einem der vorhergehenden Ansprüche,
**dadurch gekennzeichnet,**
**dass** das den Tragprofilen (6) zugeordnete, ausziehbare Teil (15) des Lastenträgers (1) in seiner eingeschobenen und in seiner ausgezogenen Lage über eine Drehfalle (61) verriegelbar ist, die auf ihre Verriegelungslage federbelastet ist.

18. Ausziehbarer Lastenträger nach Anspruch 17,
**dadurch gekennzeichnet,**
**dass** die Drehfalle (61) dem mit den Führungsprofilen (5) verbundenen aufbaufesten Teil (16) des Lastenträgers (1) zugeordnet ist.

19. Ausziehbarer Lastenträger nach Anspruch 17 oder 18,
**dadurch gekennzeichnet,**
**dass** die Drehfalle (61) am bezogen auf die Ausziehrichtung des Lastenträgers 81) vorderen Endbereich des aufbaufesten Teiles (16) des Lastenträgers (1) vorgesehen ist und, ausgebildet als zweiarmiger Hebel, im Verfahrweg des ausziehbaren Teiles (15) des Lastenträgers (1) liegt, dem im Bereich seiner gegenüberliegenden Enden jeweils eins zur Drehfalle (61) korrespondierendes Rastglied (65, 66) zugeordnet ist.

20. Ausziehbarer Lastenträger nach Anspruch 19,
**dadurch gekennzeichnet,**
**dass** das Rastglied (65, 66) als Rastbolzen ausgebildet ist.

21. Ausziehbarer Lastenträger nach Anspruch 19 oder 20,
**dadurch gekennzeichnet,**
**dass** der zweiarmige, die Drehfalle (61) bildende Hebel sich in Ausziehrichtung des Lastenträgers (1) erstreckt und in seinen in Bezug auf seine Drehachse (Lagerbohrung 62) einander gegenüberliegenden Hebelarmen (67, 68) mit nach entgegengesetzten Seiten sich öffnenden Fangmäulern (69, 70) versehen ist.

22. Ausziehbarer Lastenträger nach Anspruch 21,
**dadurch gekennzeichnet,**
**dass** die Drehfalle (61) mit auf die Öffnung des jeweiligen Fangmaules (69, 70) zulaufenden Abdrängflächen (75, 76) versehen ist.

23. Ausziehbarer Lastenträger nach einem der Ansprüche 20 bis 22,
**dadurch gekennzeichnet,**
**dass** die Öffnungen des Fangmaules (69, 70) hakenförmig ausgebildet sind und jeweils in Überdeckung zu einer Führungsöffnung (63, 64) liegen.

## Claims

1. Extendable load-carrying frame for vehicles, in particular passenger cars, with two guide tracks which run parallel to a supporting plane and at a distance from each other and each have, matched in terms of contour and longitudinally displaceably with respect to each other, an inner and an outer profile, of which the one profile has a guide profile (5) which is fixed on the vehicle body and has a bottom chord (1) and a top chord (9), and the other profile forms a supporting profile (6) which is extendable and fixable with respect to the guide profile and has a top chord (34) corresponding to the top chord (9) of the guide profile, **characterized in that** the guide profile (5) forms the inner profile and has a longitudinally slotted top chord (9), **in that** the supporting profile (6) has a U cross section and engages over the guide profile (5) from above, and **in that** the guide profile (5) and the supporting profile (6) are connected by their top chords (9; web 54) via a clamping device, which passes through the longitudinal slot (10) of the guide profile (5), so as to be braced and load-supporting in relation to each other.

2. Extendable load-carrying frame according to Claim 1, **characterized in that in that** the supporting profile (6) is guided transversely with respect to the guide profile (5) via the clamping device (17).

3. Extendable load-carrying frame according to Claim 1 or 2, **characterized in that** the clamping device (17) has a counterplate (36) which is positioned in relation to the guide profile (5) and is supported against the top chord (web 34) of the supporting profile (6) via a clamping connection passing through the longitudinal slot (10).

4. Extendable load-carrying frame according to Claim 3, **characterized in that** the counterplate (36) is assigned a reinforcing covering plate (35) on the side of the top chord (web 34) of the supporting profile (6).

5. Extendable load-carrying frame according to one of Claims 2 to 4, **characterized in that** the clamping connection (17) has a clamping pin (38) which passes through the longitudinal slot (10), determines a clamping axis (30) and forms the guide for a clamping lock (39).

6. Extendable load-carrying frame according to Claim 5, **characterized in that** the clamping lock (39) has a clamping washer (40), which is rotatable with respect to the clamping axis (30), and a counterpart (41), and **in that** the clamping washer (40) and the counterpart (41) are provided with sector-shaped deflection elements (48; 53) which are directed towards each other in the clamping direction, located at a distance from each other and overlap each other in the clamping direction when the clamping lock (39) is not tightened.

7. Extendable load-carrying frame according to Claim 6, **characterized in that** mutually corresponding deflection elements (48 and 53) are provided centrally symmetrically with respect to the clamping axis (30).

8. Extendable load-carrying frame according to Claim 6 or 7, **characterized in that** the sector-shaped deflection elements (48 and 53) of the clamping washer (40) and/or counterpart (41) have - starting from a base plane (46) which corresponds to the starting position when the clamping lock (39) is not tightened and is perpendicular to the clamping axis (30) - a deflection surface (52), at least with respect to one of their sides, the deflection surface merging into a clamping plane (47) at a distance from the base plane (46).

9. Extendable load-carrying frame according to Claim 8, **characterized in that** the clamping plane (47) which is at a distance from the base plane (46) and is connected thereto via the deflection surface (52) runs at least substantially perpendicularly to the clamping axis (30).

10. Extendable load-carrying frame according to Claim 8 or 9, **characterized in that** the deflection surface (52) runs into the clamping plane (47).

11. Extendable load-carrying frame according to one of Claims 7 to 10, **characterized in that** the deflection surface (52) following the base plane (46) has a profile which rises steeply with respect to the base plane (46) and is inclined in particular at a small angle with respect to the perpendicular.

12. Extendable load-carrying frame according to one of Claims 8 to 11, **characterized in that** the sector-shaped deflection elements (48; 53) of the clamping washer (40) or counterpart (41) have a substantially perpendicular profile with respect to the base plane (46) on sides corresponding to sides formed by deflection surfaces (52).

13. Extendable load-carrying frame according to one of Claims 6 to 12, **characterized in that** the sector-shaped deflection elements (48; 53) of the clamping washer (40) and counterpart (41) butt against each other with their sides in the region of the base plane (46) so as to limit the angle of rotation, when the clamping lock (39) is not tightened.

14. Extendable load-carrying frame according to one of Claims 6 to 12, **characterized in that** the counterpart is designed as a counterwasher (41).

15. Extendable load-carrying frame according to one of Claims 6 to 14, **characterized in that** the counterpart (41) is fixed in position with respect to the supporting profile (6).

16. Extendable load-carrying frame according to Claim 5, **characterized in that** the counterpart (41) which is designed as a counterwasher can be fastened to the supporting profiles (6) in positions which are rotationally offset with respect to one another.

17. Extendable load-carrying frame according to one of the preceding claims, **characterized in that** the extendable part (15) of the load-carrying frame (1), which part is assigned to the supporting profiles (6), is lockable in its retracted and in its extended position via a rotary latch (61) which is spring-loaded onto its locking position.

18. Extendable load-carrying frame according to Claim 17, **characterized in that** the rotary latch (61) is assigned to that part (16) of the load-carrying frame (1) which is connected to the guide profiles (5) and is fixed on the vehicle body.

19. Extendable load-carrying frame according to Claim 17 or 18, **characterized in that** the rotary latch (61) is provided on the end region, which is at the front with respect to the extension direction of the load-carrying frame (1), of that part (16) of the load-carrying frame (1) which is fixed on the vehicle body and, designed in the form of a two-armed lever, is located in the path of movement of the extendable part (15) of the load-carrying frame (1), which part is assigned, in the region of its opposite ends, a respective latching element (65, 66) corresponding to the rotary latch (61).

20. Extendable load-carrying frame according to Claim 19, **characterized in that** the latching element (65, 66) is designed as a latching bolt.

21. Extendable load-carrying frame according to Claim 19 or 20, **characterized in that** the two-armed lever forming the rotary latch (61) extends in the extension direction of the load-carrying frame (1) and, in its lever arms (67, 68), which are located opposite each other with respect to the axis of rotation (bearing hole 62) of said lever, is provided with gripping mouths (69, 70) opening towards opposite sides.

22. Extendable load-carrying frame according to Claim 21, **characterized in that** the rotary latch (61) is provided with deflection surfaces (75, 76) converging on the opening of the respective gripping mouth (69, 70).

23. Extendable load-carrying frame according to one of Claims 20 to 22, **characterized in that** the openings of the gripping mouth (69, 70) are of hook-shaped design and are each located so as to overlap with a guide opening (63, 64).

## Revendications

1. Support de charge étirable pour véhicules, en particulier des véhicules légers, comprenant deux pistes de guidage s'étendant parallèlement à un plan porteur et de manière espacée l'une de l'autre, qui présentent chacune, de manière adaptée au contour et déplaçable en longueur l'un par rapport à l'autre, un profil interne et un profil externe, dont un profil forme un profil de guidage (5) fixé du côté de la carrosserie présentant une courroie inférieure (1) et une courroie supérieure (9) et dont l'autre profil forme un profil porteur (6) pouvant être fixé et étiré par rapport au profil de guidage, qui présente une courroie supérieure (34) correspondant à la courroie supérieure (9) du profil de guidage,
**caractérisé en ce que**
le profil de guidage (5) forme le profil interne et présente une courroie supérieure (9) fendue en longueur, **en ce que** le profil porteur (6) présente une section transversale en forme de U et vient en prise par le haut avec le profil de guidage (5) et **en ce que** le profil de guidage (5) et le profil porteur (6) sont serrés l'un contre l'autre avec leurs courroies supérieures (9 ; nervure 54) par le biais d'un dispositif de serrage traversant la fente longitudinale (10) du profil de guidage (5) et sont connectés de manière portante.

2. Support de charge étirable selon la revendication 1,
**caractérisé en ce que**
le profil porteur (6) est guidé transversalement par le biais du dispositif de serrage (17) vers le profil de guidage (5).

3. Support de charge étirable selon la revendication 1 ou 2,
**caractérisé en ce que**
le dispositif de serrage (17) présente une contre-plaque (36) insérée vers le profil de guidage (5), qui est supportée contre la courroie supérieure (nervure 34) du profil porteur (6) par le biais d'une connexion de serrage traversant la fente longitudinale (10).

4. Support de charge étirable selon la revendication 3,
**caractérisé en ce que**
la contre-plaque (36) du côté de la courroie supérieure (nervure 34) du profil porteur (6) est associée à une plaque de recouvrement de renforcement (35).

5. Support de charge étirable selon l'une quelconque des revendications 2 à 4,
**caractérisé en ce que**
la connexion de serrage (17) présente un tourillon de serrage (38) traversant la fente longitudinale (10) et définissant un axe de serrage (30), qui forme le guidage pour un manchon de serrage (39).

6. Support de charge étirable selon la revendication 5,
**caractérisé en ce que**
le manchon de serrage (39) présente un disque de serrage (40) pouvant tourner par rapport à l'axe de serrage (30) ainsi qu'une pièce conjuguée (41) et **en ce que** le disque de serrage (40) et la pièce conjuguée (41) sont pourvus d'éléments de poussée (48 ; 53) en forme de secteurs orientés l'un vers l'autre dans la direction de serrage, situés à intervalle l'un par rapport à l'autre et se chevauchant dans la direction de serrage lorsque le manchon de serrage (39) n'est pas serré.

7. Support de charge étirable selon la revendication 6,
**caractérisé en ce que**
des éléments de poussée (48, respectivement 53) mutuellement correspondants sont prévus de manière symétrique centralement par rapport à l'axe de serrage (30).

8. Support de charge étirable selon la revendication 6 ou 7,
**caractérisé en ce que**
les éléments de poussée (48 respectivement 53) en forme de secteur du disque de serrage (40) et/ou de la pièce conjuguée (41) présentent, depuis un plan de base (46) perpendiculaire à l'axe de serrage (30) et correspondant à la position de départ lorsque le manchon de serrage (39) n'est pas serré, au moins par rapport à l'un de leurs côtés, une surface de poussée (52) se prolongeant par un plan de serrage (47) espacé par rapport au plan de base (46).

9. Support de charge étirable selon la revendication 8,
**caractérisé en ce que**
le plan de serrage (47) espacé par rapport au plan de base (46) et connecté à celui-ci par le biais de la surface de poussée (52) s'étend au moins essentiellement perpendiculairement à l'axe de serrage (30).

10. Support de charge étirable selon la revendication 8 ou 9,
**caractérisé en ce que**
la surface de poussée (52) entre en s'étendant dans le plan de serrage (47).

11. Support de charge étirable selon l'une quelconque des revendications 7 à 10,
**caractérisé en ce que**
la surface de poussée (52) présente, à la suite du plan de base (46), une allure montant fortement par rapport au plan de base (46), inclinée notamment à plat par rapport à la verticale.

12. Support de charge étirable selon l'une quelconque des revendications 8 à 11,
**caractérisé en ce que**
les éléments de poussée en forme de secteur (48 ; 53) du disque de serrage (40) ou de la pièce conjuguée (41) présentent une allure essentiellement verticale par rapport au plan de base (46) au niveau de côtés correspondants aux côtés formés par les surfaces de poussée (52).

13. Support de charge étirable selon l'une quelconque des revendications 6 à 12,
**caractérisé en ce que**
les éléments de poussée en forme de secteur (48 ; 53) du disque de serrage (40) et de la pièce conjuguée (41) viennent en butée l'un contre l'autre avec leurs côtés dans la région du plan de base (46), en limitant l'angle de rotation, lorsque le manchon de serrage (39) n'est pas serré.

14. Support de charge étirable selon l'une quelconque des revendications 6 à 12,
**caractérisé en ce que**
la pièce conjuguée est réalisée sous forme de disque conjugué (41).

15. Support de charge étirable selon l'une quelconque des revendications 6 à 14,
**caractérisé en ce que**
la pièce conjuguée (41) est fixée en position par rapport au profil porteur (6).

16. Support de charge étirable selon la revendication 5,
**caractérisé en ce que**
la pièce conjuguée (41) réalisée sous forme de disque conjugué peut être fixée dans des positions décalées angulairement les unes par rapport aux autres sur les profils porteurs (6).

17. Support de charge étirable selon l'une quelconque des revendications précédentes,
**caractérisé en ce que**
la partie étirable (15) du support de charge (1) associée aux profilés porteurs (6) peut être verrouillée dans sa position enfoncée et dans sa position étirée par le biais d'un pêne pivotant (61) qui est sollicité par ressort vers sa position de verrouillage.

18. Support de charge étirable selon la revendication 17,
**caractérisé en ce que**
le pêne pivotant (61) est associé à la partie (16) du support de charge (1) fixée à la carrosserie et connectée aux profils de guidage (5).

19. Support de charge étirable selon la revendication 17 ou 18,
**caractérisé en ce que**
le pêne pivotant (61) est prévu au niveau de la région d'extrémité avant de la partie (16) fixée à la carrosserie du support de charge (1), par rapport à la direction d'étirement du support de charge (1), est réalisé sous forme de levier à deux bras, et se situe dans la trajectoire de déplacement de la partie étirable (15) du support de charge (1), auquel est associé, dans la région de ses extrémités opposées, à chaque fois un organe d'encliquetage (65, 66) correspondant au pêne pivotant (61).

20. Support de charge étirable selon la revendication 19,
**caractérisé en ce que**
l'organe d'encliquetage (65, 66) est réalisé sous forme de boulon d'encliquetage.

21. Support de charge étirable selon la revendication 19 ou 20,
**caractérisé en ce que**
le levier à deux bras formant le pêne pivotant (61) s'étend dans la direction d'étirage du support de charge (1) et est pourvu dans ses bras de levier (67, 68) opposés l'un à l'autre par rapport à son axe de rotation (alésage de palier 62), de mors de préhension (69, 70) s'ouvrant vers des côtés opposés.

22. Support de charge étirable selon la revendication 21,
**caractérisé en ce que**
le pêne pivotant (61) est pourvu de surfaces de poussée (75, 76) se terminant au niveau de l'ouverture du mors de préhension respectif (69, 70).

23. Support de charge étirable selon l'une quelconque des revendications 20 à 22,
**caractérisé en ce que**
les ouvertures du mors de préhension (69, 70) sont réalisées en forme de crochet et se situent à chaque fois de manière à recouvrir une ouverture de guidage (63, 64).
